# EUROPÄISCHE PATENTANMELDUNG

(11) **EP 1 321 249 A2**
(43) Veröffentlichungstag der Anmeldung: **25.06.2003**
(21) Anmeldenummer: 02026151.7
(22) Anmeldetag: 25.11.2002
(51) Int. Cl.: B25J 15/02

(54) **Objektgreifer für die Automatisierungstechnik**

(30) Priorität: 06.12.2001 DE 10159921
(71) Anmelder: imt robot AG, 70736 Fellbach (DE)
(72) Erfinder: Nagler, Peter, 70736 Fellbach (DE)
(74) Vertreter: Wasmuth, Rolf, Dipl.-Ing.

(57) **Zusammenfassung**

Die Erfindung betrifft einen Objektgreifer für einen Roboterarm in der Automatisierungstechnik. Der Objektgreifer (1) besteht aus einem Grundkörper (3) und zumindest einem auf einer Flachseite (4) des Grundkörpers (3) angeordneten Greifelement (20) mit einem Greifkopf (32). In der aktiven Greifposition liegt der Greifkopf (32) mit einer Anlagefläche (33) am gegriffenen Objekt auf, wobei die Anlagefläche (33) in dieser aktiven Greifposition etwa in der Ebene der Flachseite (4) des Grundkörpers (3) zurückgezogen liegt. In einer vom Objekt (2) gelösten Ausgangslage liegt die Anlagefläche (33) mit einem Abstand (x) zur Flachseite (4) des Grundkörpers, die in der aktiven Greifposition eine Abstützfläche für das gegriffene Objekt (2) bildet. Damit ist ein sicherer Halt des Objektes (2) auch bei hohen Beschleunigungen und rasch aufeinanderfolgenden Richtungswechseln gewährleistet.

## Beschreibung

Die Erfindung betrifft einen Objektgreifer für die Automatisierungstechnik, insbesondere für einen Roboterarm oder dgl. nach dem Oberbegriff des Anspruchs 1.

In der Automatisierungstechnik werden mit Objektgreifern zu handhabende Objekte gegriffen und über Bewegungsbahnen einem gewünschten Zielort zugeführt. So sind in der Lebensmittelindustrie Objektgreifer bekannt, die aus zwei Greifelementen bestehen, welche an einer gemeinsamen Grundplatte festgelegt sind. Die Greifelemente sind z.B. Sauger, die sich nach Anlegen eines pneumatischen Unterdruckes auf der Oberfläche eines zu greifenden Objektes festsaugen und dieses greifen. Das durch die beiden Greifelemente eines Objektgreifers fixierte Objekt wird dann angehoben und über eine dreidimensionale Bewegungsbahn zum Zielort bewegt. Dabei können abhängig von der Bewegungsbahn auf das gegriffene Objekt erhebliche Beschleunigungskräfte wirken, die die Gefahr eines Lösens des Objektes vom Objektgreifer begründen. Bei biegeschlaffen Objekten wie rohen Würsten oder dgl. können sich bei der Handhabung des Objektes Schwingungen aufbauen, durch welche sich das Objekt vom Sauger löst und herabfällt. Daher dürfen insbesondere bei der bekannten Handhabung von biegeschlaffen Objekten bestimmte Beschleunigungen nicht überstritten werden und Richtungswechsel einer Bewegungsbahn nicht rasch aufeinanderfolgen. Die mögliche Leistungsfähigkeit zum Beispiel einer Robotersortieranlage ist dadurch eingeschränkt.

Der Erfindung liegt die Aufgabe zugrunde, einen Objektgreifer der gattungsgemäßen Art derart weiterzubilden, daß eine Fixierung des gegriffenen Objektes auch unter hohen Beschleunigungen und raschen Richtungswechseln gewährleistet ist.

Die Aufgabe wird erfindungsgemäß nach den kennzeichnenden Merkmalen des Anspruchs 1 gelöst.

In der Ruhelage liegen die Greifköpfe der Greifelemente des Objektgreifers etwa mit Abstand vor der Flachseite des Objektgreifers, so daß eine sichere Auflage auf dem zu greifenden Objekt gewährleistet ist. Da die Greifelemente in der Flachseite des Grundkörpers eingelassen sind, können sich die Saugteller des Greifkopfes in der aktiven Greifposition in den Grundkörper zurückziehen, so daß sie in einer aktiven Greifposition etwa in der Ebene der Flachseite liegen. Dadurch wird das Objekt an die Flachseite des Grundkörpers angelegt, so daß die Flachseite des Grundkörpers eine ein Widerlager bildende Abstützfläche für das gegriffene Objekt ist. Ein biegeschlaffes Objekt wird dabei durch Anlage an der Abstützfläche ausgerichtet, d.h., etwa parallel zur Ebene der Abstützfläche ausgerichtet. Dies bedeutet, daß ein gegriffenes Objekt nicht nur an zwei voneinander entfernt liegenden Punkten gegriffen wird, sondern auch in dem Bereich zwischen den beiden Greifelementen gegen Bewegungen abgestützt ist. Insbesondere bei biegeschlaffen Objekten wie rohen Würsten und dgl. ist so gewährleistet, daß das Objekt selbst bei der Handhabung kaum Schwingungen aufbauen kann, so daß auch bei Beschleunigungen und rasch aufeinanderfolgenden Richtungswechseln ein sicheres Halten des Objektes am Objektgreifer gegeben ist. Dabei ist auch von Bedeutung, daß die Anlagefläche einen bestimmten Reibwert hat, so daß das Objekt in der Ebene der Anlagefläche durch Reibkräfte abgestützt wird.

Bevorzugt liegt der Griffkopf mit geringem radialen Spiel in einer Aufnahmebohrung des Grundkörpers, wobei der Innenmantel der Aufnahmebohrung eine Seitenstütze für den Sauger des Greifkopfes bildet. Auch bei starken horizontalen Beschleunigungen ist ein seitliches Ausweichen des Greifkopfes relativ zum Grundkörper vermieden, wodurch einem Lösen des Objektes vom Objektgreifer entgegengewirkt ist.

Vorteilhaft hat der Grundkörper eine quaderförmige Raumform mit inneren Ausnehmungen, wobei die Ausnehmungen zu zumindest einer Seitenfläche und insbesondere zu einer Abstützfläche des Grundkörpers offen sind. Die Ausnehmungen sind dabei größer als die in der Flachseite vorgesehene Montageöffnung für das Greifelement, so daß möglichst wenig Masse gegeben ist. Vorzugsweise ist der Grundkörper des Objektgreifers aus einem Kunststoff, insbesondere aus POM hergestellt.

Weitere Merkmale der Erfindung ergeben sich aus den weiteren Ansprüchen, der Beschreibung und der Zeichnung, in der ein nachfolgendes im Einzelnen beschriebenes Ausführungsbeispiel die Erfindung dargestellt ist. Es zeigen:
- Fig. 1: eine perspektivische Ansicht eines erfindungsgemäßen Objektgreifers mit schematisch angedeutetem Objekt,
- Fig. 2: in perspektivischer Darstellung eine Explosionsdarstellung des Objektgreifers nach Fig. 1,
- Fig. 3: eine perspektivische Ansicht des Grundkörpers des Objektgreifers nach Fig. 1 von unten,
- Fig. 4: eine perspektivische Ansicht auf den Grundkörper nach Fig. 3 von der Seite,
- Fig. 5: einen Schnitt durch den Grundkörper nach Fig. 4 längs der Linie V-V in Fig. 4.

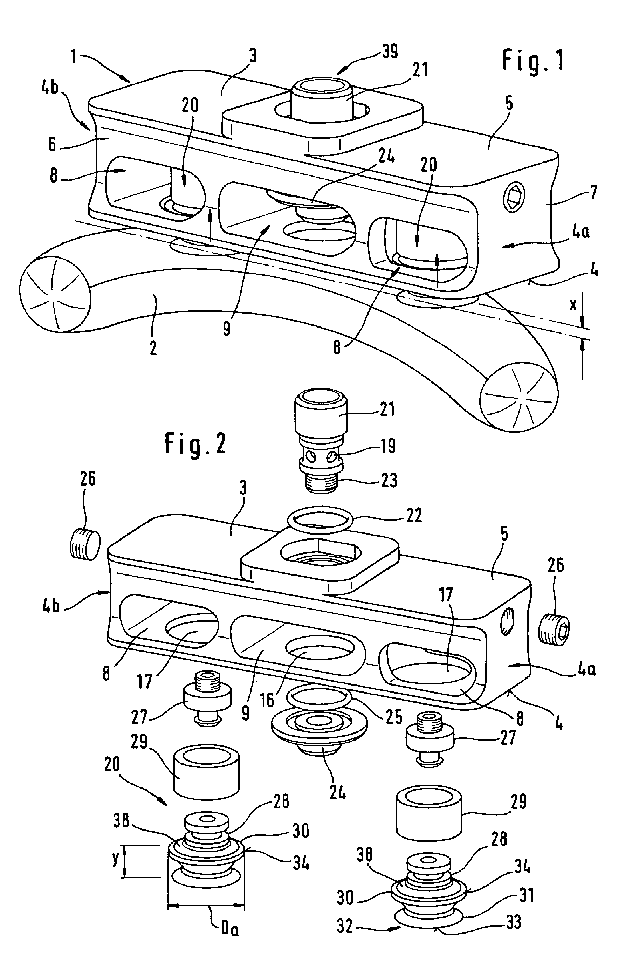

Der in Fig. 1 dargestellte Objektgreifer 1 ist insbesondere in der Automatisierungstechnik eingesetzt, so zum Beispiel an einem Roboterarm zum Greifen von Objekten 2. Die Objekte 2 können Objekte jeglicher Art sein, im gezeigten Ausführungsbeispiel sind es insbesondere biegeschlaffe Objekte, wie sie in der Lebensmittelindustrie vorkommen. Derartige biegeschlaffe Objekte können zum Beispiel Würste oder dgl. sein.

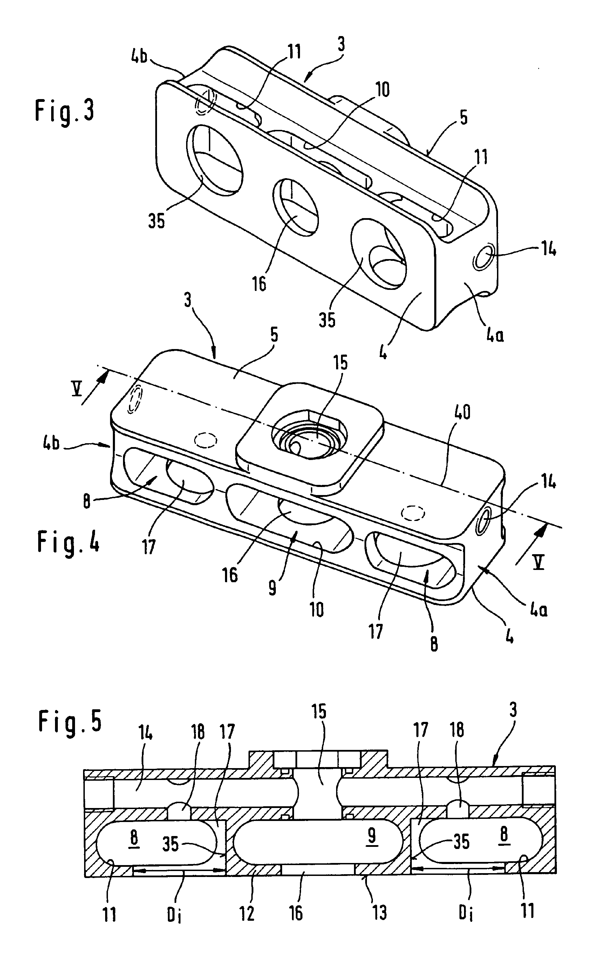

Der Objektgreifer 1 besteht aus einem Grundkörper 3, der im Ausführungsbeispiel eine im wesentlichen quaderförmige Gestalt hat. Der Grundkörper 3 weist eine untere Flachseite 4, eine obere Flachseite 5 sowie lange Schmalseiten 6 und kurze Schmalseiten 7 auf. Wie auch den Einzeldarstellungen des Grundkörpers nach den Fig. 3 bis 5 zu entnehmen, hat der Grundkörper innere Ausnehmungen 8 und 9, wobei die Ausnehmung 9 eine zentrale Ausnehmung bildet, die in Längsrichtung des Grundkörpers 3 in dessen Mitte angeordnet ist. Die zentrale Ausnehmung 9 ist ferner zu den langen Schmalseiten 6 offen ausgebildet, wobei die Ausnehmung 9 über die gesamte Breite des Grundkörpers 3 mit einem gleichen Querschnitt ausgebildet ist, der dem Querschnitt der schmalseitigen Öffnungen 10 entspricht.

Endseitig des Grundkörpers 3 liegen der zentralen Ausnehmung 9 benachbart endseitige Ausnehmungen 8, die, wie insbesondere Fig. 5 zeigt, ebenfalls zu den langen Schmalseiten 6 offen sind. Die Öffnungen 11 in der langen Schmalseite 6 entsprechen oval gerundeten Rechtecken; der Querschnitt der Öffnungen 11 entspricht dem jeweiligen Querschnitt der Ausnehmungen 8.

Die Böden der Ausnehmungen 8 und 9 bilden eine gemeinsame Abstützplatte 12, deren Abstützfläche 13 der Flachseite 4 des Grundkörpers 3 entspricht. Oberhalb der Ausnehmungen 8 und 9 ist im Grundkörper 3 ein in Längsrichtung des Grundkörpers 3 verlaufender Betriebsmittelkanal 14 vorgesehen, der eine Zentralbohrung 15 orthogonal kreuzt. Die Zentralbohrung 15 ist von der oberen Flachseite 5 ausgehend in den Grundkörper 3 eingebracht und mündet in der zentralen Ausnehmung 9. Der Zentralbohrung 15 gegenüberliegend ist in dem Boden der Ausnehmung 9 eine zentrale Montageöffnung 16 vorgesehen, deren Durchmesser größer als der Durchmesser der Zentralbohrung 15 ist.

Von der unteren Flachseite 4 aus, die die Abstützfläche 13 bildet, sind in den Grundkörper 3 Aufnahmebohrungen 17 für Greifelemente 20 eingebracht. Die Aufnahmebohrungen liegen zur Ausnehmung 8 außermittig sowie zur zentralen Ausnehmung 9 seitlich versetzt und enden in einer Verbindungsbohrung 18, die in den Betriebsmittelkanal 14 mündet.

Wie Fig. 2 zeigt, wird in die Zentralbohrung 15 ein Adapterflansch 21 eingesetzt, der über einen Dichtring 22 gegenüber der oberen Flachseite 5 abgedichtet ist. Der Adapterflansch 21 weist Querbohrungen 19 auf, die im Betriebsmittelkanal 14 zu liegen kommen und eine Strömungsverbindung zwischen dem Adapterflansch 21 und dem Betriebsmittelkanal 14 gewährleisten.

Der Adapterflansch 21 durchragt die Zentralbohrung 15 mit einem Gewindeende 23, auf welches zur Sicherung des Adapterflansches 21 der Zentralbohrung 15 des Grundkörpers 3 eine Rändelmutter 24 aufgeschraubt ist. Zwischen der Rändelmutter 24 und dem Dach der Ausnehmung 9 ist zur Abdichtung ein weiterer Dichtring 25 - im Ausführungsbeispiel ein O-Ring - angeordnet. Der Betriebsmittelkanal ist endseitig durch eingeschraubte Verschlußstopfen 26 verschlossen, so daß ein über den Adapterflansch 21 eingebrachtes Betriebsmittel auf die Verbindungsbohrungen 18 verteilt wird.

In jeder Verbindungsbohrung 18 einer Aufnahmebohrung 17 in der Ausnehmung 8 ist ein Saugeradapter 27 eingeschraubt, auf den ein aus elastischem Material bestehender, einem Faltenbalg ähnlicher Sauger 28 aufgesteckt ist. Zur Stabilisierung des Saugers 28 ist dieser von einem Stützring 29 zumindest teilweise umgeben, wobei der Stützring 29 zwischen dem Sauger 28 und dem Saugeradapter 27 angeordnet ist.

Der Saugeradapter 27 hat einen Außenring 30, der den maximalen Außendurchmesser des Saugers 28 darstellt. Unterhalb des Außenrings 30 liegt ein Saugteller 31, der den Greifkopf 32 bildet und eine Anlagefläche 33 definiert.

Der Innendurchmesser Dᵢ der Aufnahmebohrung 17 ist geringfügig größer als der Außendurchmesser Dₐ des Außenrings 30 des Saugers 28, wobei in der montierten Lage des Greifelementes 20 in der Aufnahmebohrung 17 eine Mantelfläche 34 des Außenrings 30 dem Innenmantel 35 der Aufnahmebohrung 17 mit geringem radialen Spiel gegenüberliegt. Dadurch kann der Innenmantel 35 der Aufnahmebohrung 17 den Sauger 28 seitlich abstützen, so daß ein durch den Sauger gegriffenes Objekt 2 auch bei Beschleunigungen des Objektgreifers 1 sicher gehalten ist.

Wie Fig. 1 zeigt, sind an dem Objektgreifer 1 auf der dem Objekt 2 zugewandten Flachseite 4 des Grundkörpers 3 zwei Greifelemente 20 angeordnet, die zueinander mit Abstand liegen und im Ausführungsbeispiel jeweils an einander entfernt liegenden Enden 4a, 4b des Grundkörpers 3 angeordnet sind. Die Greifelemente 20 liegen in Draufsicht bevorzugt symmetrisch zu einer Längsmittelachse 40 des Grundkörpers 3, wobei die Längsmittelachse 40 gleichzeitig die Flachseiten 4 und 5 symmetrisch teilt. Es können auch mehr als zwei Greifelemente angeordnet sein, die auf einer gemeinsamen Geraden oder an den Eckpunkten beliebiger ebener Figuren (Dreieck, Rechteck, Kreis) liegen können.

In einer Ausgangsstellung des Objektgreifers 1 liegen die Saugteller 31 der Greifköpfe 32 z.B. mit einem Abstand x zur Flachseite 4 des Grundkörpers 3. Die Saugteller 31 der Greifköpfe 32 haben einen geringeren Maximaldurchmesser als der Außenring 30 bzw. als der Innendurchmesser Dᵢ der Aufnahmebohrung 17. Daher können die Saugteller 31 in die Aufnahmebohrungen 17 im Grundkörper 3 eintauchen, wodurch ein Greifelement in einer aktiven Greifposition weitgehend zurückgezogen in einer Aufnahmebohrung 17 liegen kann.

Wird an dem gemeinsamen Betriebsmittelanschluß 39 des Adapterflansches 21 ein pneumatischer Unterdruck angelegt, so steht dieser über den Betriebsmittelkanal 14 gleichzeitig an den Verbindungsbohrungen 18 und damit an den Saugeradaptern sowie den an den Saugeradaptern 27 angeschlossenen Saugern 28 an. Wird der Objektgreifer 1 auf ein Objekt 2 abgesenkt, legen sich die Saugteller 31 an die Oberfläche des Objektes 2 an, saugen sich fest und halten das Objekt 2 fest. Aufgrund der Elastizität eines Saugers 28 wird sich dessen Falte 38 zusammenziehen, wodurch sich die Länge y (Fig. 2) des Saugers 28 verkürzt. Hierdurch wird das Objekt 2 in Richtung auf die Flachseite 4 des Grundkörpers 3 gezogen und legt sich an die Flachseite 4 an, die somit nicht nur eine Abstützfläche für das gegriffene Objekt 2 bildet, sondern das gegriffene Objekt nach der Abstützfläche ausrichtet. Dies ist insbesondere bei biegeschlaffen Objekten von Vorteil. In der aktiven Greifposition liegen die Anlageflächen 33 des Greifkopfes 32 bzw. des Saugtellers 31 etwa in der Ebene der Flachseite 4. Der in der Ruhestellung der Sauger 28 gegebene Abstand x zwischen der Anlagefläche 33 des Saugtellers 31 und der Flachseite 4 ist in der aktiven Greifposition etwa auf Null reduziert, so daß das gegriffene Objekt 2 nicht nur durch die Sauger 28 gehalten ist, sondern gleichzeitig an der Flachseite 4 des Grundkörpers 3 als Abstützfläche anliegt. Die Flachseite 4 bildet somit ein Widerlager für das gegriffene Objekt 2, so daß auch bei starken Beschleunigungen des Objektgreifers in alle Raumrichtungen ein Lösen des Objektes 2 vom Objektgreifer weitgehend vermieden ist. Insbesondere bei biegeschlaffen Objekten wie rohen Würsten oder dgl. ist durch die zusätzliche Anlage des gegriffenen Objekts 2 an der Flachseite 4 des Grundkörpers 3 eine Aussteifung erreicht, die ein Schwingen eines biegeschlaffen Objektes 2 weitgehend unterbindet. Auch bei starken Beschleunigungen und Bewegungen des Objektgreifers über eine kurvige Bewegungsbahn ist ein sicherer Halt des biegeschlaffen Objektes gewährleistet. Um auch einen guten Halt etwa parallel zur Abstützfläche zu erzielen, ist die Fläche als Reibfläche vorgesehen, die reibwerterhöhend bearbeitet sein kann. Die wirkenden Reibkräfte verhindern ein Verrutschen des an der Abstützfläche anliegenden Objektes.

## Patentansprüche

1. Objektgreifer für die Automatisierungstechnik, insbesondere für einen Roboterarm oder dgl., bestehend aus einem Grundkörper (3) und zumindest einem auf einer Flachseite (4) des Grundkörpers (3) angeordneten Greifelement (20) mit einem Greifkopf (32), dessen am gegriffenen Objekt (2) aufliegende Anlagefläche (33) in der aktiven Greifposition gegenüber einer vom Objekt (2) gelösten Ausgangslage zurückgezogen liegt,
**dadurch gekennzeichnet, daß** das Greifelement (20) in der Flachseite (4) des Grundkörpers (3) eingelassen ist und die Anlagefläche (33) des Greifkopfes (32) in der aktiven Greifposition etwa in der Ebene der Flachseite (4) liegt, wobei die Flachseite (4) des Grundkörpers (3) eine Abstützfläche für das gegriffene Objekt (2) bildet.

2. Objektgreifer nach Anspruch 1,
**dadurch gekennzeichnet, daß** der Greifkopf (32) mit geringem radialen Spiel in einer Aufnahmebohrung (17) des Grundkörpers (3) liegt, wobei der Innenmantel (35) der Aufnahmebohrung (17) eine Seitenstütze für den Greifkopf (32) bildet.

3. Objektgreifer nach Anspruch 1 oder 2,
**dadurch gekennzeichnet, daß** der Grundkörper (3) eine quaderförmige Raumform mit inneren Ausnehmungen (8, 9) hat.

4. Objektgreifer nach Anspruch 3,
**dadurch gekennzeichnet, daß** die inneren Ausnehmungen (8, 9) zur Abstützfläche (4) und zumindest einer seitlichen Schmalseite (6) des Grundkörpers (3) offen sind.

5. Objektgreifer nach Anspruch 3 oder 4,
**dadurch gekennzeichnet, daß** die Ausnehmungen (8, 9) größer als in der Flachseite (4) vorgesehene Montageöffnungen (16) für das Greifelement (20) sind.

6. Objektgreifer nach einem der Ansprüche 1 bis 5,
**dadurch gekennzeichnet, daß** in der Flachseite (4) des Grundkörpers (3) zwei oder mehrere Greifelemente (20) angeordnet sind.

7. Objektgreifer nach Anspruch 6,
**dadurch gekennzeichnet, daß** die Greifelemente (20) mit Abstand zueinander liegen, vorzugsweise an einander entfernt liegenden Enden (4a, 4b) der Flachseite (4) angeordnet sind.

8. Objektgreifer nach einem der Ansprüche 1 bis 7,
**dadurch gekennzeichnet, daß** das Greifelement (20) ein elastischer Sauger (28) mit einem einen Greifkopf (32) bildenden Saugteller (31) ist.

9. Objektgreifer nach Anspruch 8,
**dadurch gekennzeichnet, daß** der Sauger (28) ein pneumatischer Sauger ist.

10. Objektgreifer nach einem der Ansprüche 1 bis 9,
**dadurch gekennzeichnet, daß** die Greifelemente (20) der Flachseite (4) des insbesondere aus Kunststoff bestehenden Grundkörpers (3) an einem gemeinsamen Betriebsmittelanschluß (39) angeschlossen sind.
